# EUROPEAN PATENT SPECIFICATION

(11) **EP 2 463 522 B1**
(45) Date of publication and mention of the grant of the patent: **09.03.2016**
(21) Application number: 11192208.4
(22) Date of filing: 06.12.2011
(51) Int. Cl.: F03D 7/04, F03D 7/02

(54) **Pitch gears**
Verstellgetriebe
Engrenages à pas

(30) Priority: 08.12.2010 GB 201020829
(43) Date of publication of application: 13.06.2012
(73) Proprietor: Vestas Wind Systems A/S, 8200 Aarhus N (DK)
(72) Inventor: Andersen, Jesper Lykkegaard, 8543 Hornslet (DK); Bech, Anton, 6950 Ringkøbing (DK)
(74) Representative: Vestas Patents Department

(56) References cited:
- WO-A1-00/09885
- DE-A1- 19 644 705
- US-A1- 2003 129 059
- US-A1- 2007 231 137
- US-A1- 2009 220 343
- US-A1- 2010 143 136

## Description

### Background to the Invention

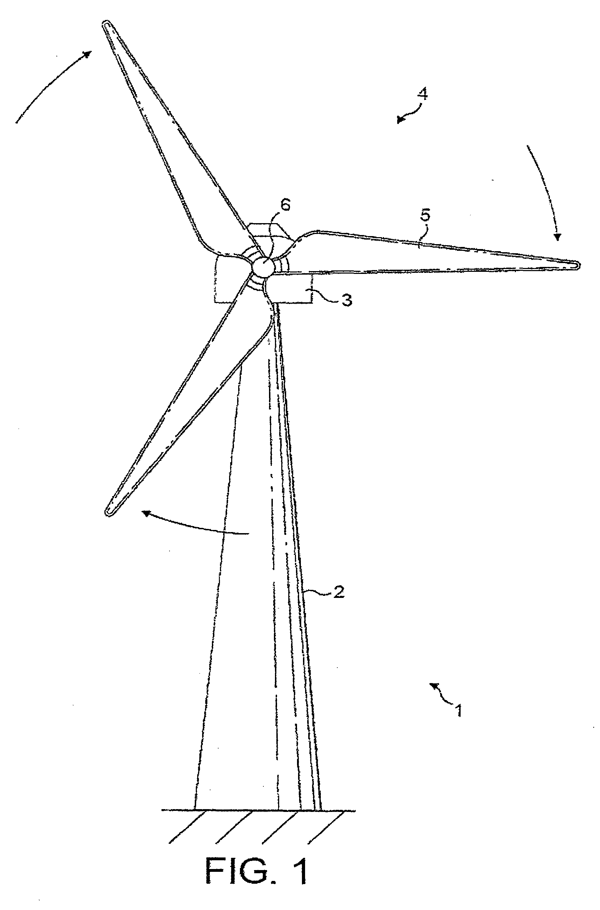

Figure 1 illustrates a wind turbine 1, comprising a tower 2 on which a nacelle 3 is mounted. At least one turbine blade 5 is mounted on a hub 6 to form a rotor 4. The hub 6 is connected to the nacelle 3 through a low speed shaft (not shown) extending from the nacelle front. The wind turbine illustrated in Figure 1 may be a small model intended for domestic or light utility usage, or may be a large model, such as those that are suitable for use in large scale electricity generation on a wind farm. In the latter case, the diameter of the rotor may be as large as 150 metres or more.

The rotor blades of wind turbines are designed to extract power from the wind by virtue of their aerodynamic shape, and subsequent wind induced rotation. For horizontal axis wind turbines, the blades rotate around a rotor hub attached to a nacelle mounted on a wind turbine tower, and the rotation of the rotor turns a drive shaft connected in turn to a generator which produces electricity. For horizontal axis wind turbines to operate efficiently and extract the maximum power from the wind, the wind turbine nacelle and the axis around which the wind turbine rotor rotates, is angled into the wind to the greatest extent possible, such that the rotational axis of the rotor is aligned with the wind direction.

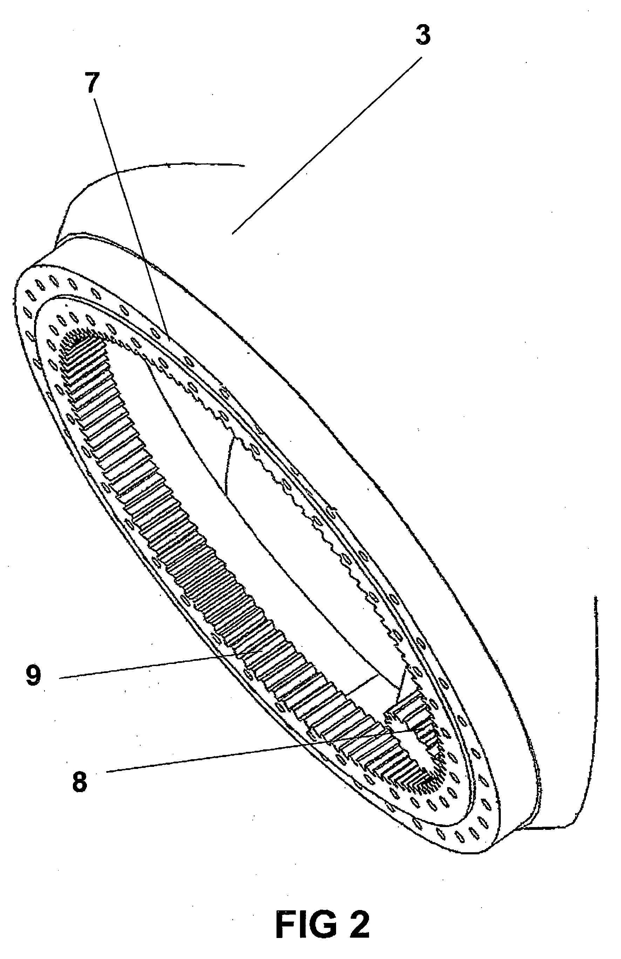

Modern wind turbines control the load on the rotor by pitching the blades in and out of the incoming wind. The blades are pitched to optimize the output or to protect the wind turbine from damaging overloads during high winds. Figure 2 shows a known pitching arrangement between a hub 3 and a blade (not shown). The pitch bearing 7 is located between the hub and the blade. A gear 9 is formed on the pitch bearing 7 and a torque is applied to the gear to turn the pitch bearing by pinion 8. The pinion is turned by an actuator or motor, such as a hydraulic cylinder or electric motor, to provide the torque for pitching the blade and maintaining it in a given position. Such a pitching arrangement enables each blade to be turned approximately 90° around their longitudinal axis. The gear ring 9 of previous wind turbine systems comprises a single ring extending around the entirety or a portion of the pitch bearing 7.

US2007/231137 A1 discloses a pitch system to obtain a uniform load to the bearings.

US2003/129059 A1 discloses a system for pitching blades individually to others.

We have appreciated that it would be advantageous to provide an improved pitch system.

### Summary of the Invention

The invention is defined in the independent claims to which reference is now directed. Advantageous features are set forth in the dependent claims.

Embodiments of the invention provide a system/apparatus for a wind turbine rotor blade. The system/apparatus comprises a pitch system comprising a bearing attached to a wind turbine hub and arranged to be attachable to a wind turbine rotor blade. The bearing allows the rotor blade to rotate relative to the hub about its longitudinal axis. Two or more pitch gears, preferably ring gears, are coupled to the pitch system, either being coupled to the bearing or to the hub, the pitch gears being separated along the axis of rotation of the bearing. An actuator, such as an electric or hydraulic motor, is arranged to engage with the two or more pitch gears, via one or more pinions coupled to the actuator, and to cause rotation of a rotor blade with the bearing. Having two or more pitch gears engaging with a common pinion, or each engaged with separate pinions, to rotate the blade may reduce the weight of the pitch gear, since two gears separated along the axis of rotation of the bearing can be made lighter than a single ring gear whilst covering the same length along the bearing axis.

The actuator causes rotation of a rotor blade with the bearing by applying a torque to, or exerting a torque on, the two or more pitch gears via the pinions. The pinions apply torque generated by the actuator to the pitch gears by engaging with the pitch gears. In particular, teeth or grooves in the pinions may engage with corresponding teeth or grooves in the pitch gears. By the application of torque it is intended to mean that a pinion engages directly with a pitch gear and applies torque directly thereto.

The two or more pitch gears are preferably mounted so that they rotate about a common centre, preferably with the gears being arranged to rotate about the axis of rotation of the bearing and the teeth of each gear being aligned with the teeth of the other gears along a line substantially parallel to the axis of rotation of the bearing.

One or more of the pitch gears may be comprised of a first segment and one or more other segments, each segment having a plurality of teeth for engaging with at least one of the one or more pinions. Having a plurality of discrete segments makes it possible to replace those segments that experience a higher amount of wear during operation, avoiding the need to replace the entire gear. Preferably one of the segments extends along a smaller circumferential distance than the other segments, this being the segment that experiences the highest amount of wear from pitching the blade in the "operational range" for controlling the power and speed of the rotor when the turbine is being used to extract energy from oncoming wind. At least the first segment is attached, or held in place, by releasable fasteners, being attached to or coupled to a component of the pitch system such as the hub or bearing, and extends a predetermined amount along the circumference of the pitch gear. This predetermined amount is preferably determined based on anticipated wear of the pitch gear. Anticipated wear relates to wear on the pitch gear caused by the pinion moving over the pitch gear surface. In particular, as described herein, the pinion spends the majority of the time, when in motion, moving over a relatively narrow range of teeth on the pitch gear. A determination is made of the most likely portions or locations of the pitch gear that will be subjected to higher wear than other portions based on the regions most frequently travelled over by the pinion. The predetermined amount that the first portion extends may thus be considered an estimate, anticipation or predetermination of a high wear region determined before wear to that region is experienced by the pitch gear when in operation in a turbine. The first segment can thus be sized to extend over a region or portion of the pitch gear expected to be subjected to high wear, or higher wear than the remainder of the pitch gear.

The join between a segment and an adjacent segment, such as the first and second segment, may be offset from the join between a corresponding segment and adjacent segment, such as the first and second segment, of the other pitch gear. This avoids a high load being simultaneously applied to both joint regions. Furthermore, the gear surface in the region of the join between two segments is arranged to reduce the load exerted on the gear surface by the pinion, such as by reducing the height of the gear teeth relative to other gear teeth of the gear surface in the region of the join by machining or grinding them down.

Preferably at least one of the two or more gears is mounted such that it can rotate relative to the axis of rotation of the bearing independently of the bearing by a small amount, such as 1° to 5° or corresponding to the circumference of the ring gear occupied by a single tooth on the gear. This allows for slight variations in the alignment of the two or more gear rings by allowing for some play in the relative positioning of the gears.

The pitch gears may be directly attached to the bearing, preferably with releasable fasteners, or may be coupled to the bearing via a flange so that the gear rings are not in direct contact with the bearing. Again, preferably the gears are attached to the coupling flange by releasable fasteners to allow for replacement and adjustment of the pitch gears. The flange is connected to the element of the pitch system and arranged to support the pitch gears such that they are separate from the element of the pitch system. Preferably the flange supports the pitch gears between the axis of rotation of the pitch bearing and the pitch bearing circumference. Preferably the flange comprises a first portion and a second portion, the first portion connecting to the pitch bearing and supporting the second portion at a distance closer to the blade tip than the bearing along the bearing axis, and the second portion extending into the space between the circumference of the bearing and the axis of rotation of the bearing.

A pitch sub assembly may also be provided, particularly when the pitch gear surface is coupled to the hub rather than to the pitch bearing, for use in the pitch system described above. The pitch sub assembly comprises a pitch bearing that is attachable to both a wind turbine hub and a wind turbine blade. The two or more pitch gears are coupled to the pitch bearing and the pitch gears are spaced along the axis of rotation of the bearing. An actuator is arranged to engage with two or more pitch gears, via one or more pinions coupled to the actuator, for rotating the rotor blade on the bearing by applying a torque to, or exerting a torque on, the two or more pitch gears via the pinions. The pinions would be supported such that they can cause relative rotation between the hub and the relevant part of the bearing, such as by being supported by coupling to the hub.

According to a second aspect, embodiments of the invention may provide a system for a wind turbine rotor blade, the system comprising a pitch system comprising a pitch bearing attached to a wind turbine hub and attachable to a wind turbine rotor blade. Two or more pitch gears are coupled to the pitch system, the pitch gears being spaced along the axis of rotation of the bearing. Two or more pinions are coupled to respective actuators, the pinions arranged to engage with different respective ones of the two or more pitch gears for rotating a rotor blade on the bearing. The actuators are both mounted directly on, or coupled to, the same pitch system component, such as the hub, the bearing, the blade or the blade coupling flange of the sort described herein. The actuators are thus both effectively coupled to one portion of the bearing, being the hub or blade portion of it.

When mounted on the bearing the actuators are preferably both coupled to, or mounted on, the same bearing ring.

The two or more pinions are preferably located at different circumferential positions along the pitch gear to one another.

Any preferable feature of the first aspect may be combined with the second aspect, and any preferable features of the second aspect,

Embodiments of the second aspect of the invention may be described by the clauses found in Annex 1 at the end of the description.

A pitch sub assembly may also be provided for use in the pitch system of the second aspect, the pitch sub assembly comprising a pitch bearing, being attachable to a wind turbine hub and wind turbine blade, and two or more pitch gears coupled to the pitch bearing, the pitch gears being spaced along the axis of rotation of the bearing. Two or more pinions are coupled to respective actuators, the pinions arranged to engage with different respective ones of the two or more pitch gears for rotating a rotor blade on the bearing. The actuators are both mountable directly on, or configured to be coupled to, the same pitch system component, such as the hub, the bearing, the blade or the blade coupling flange of the sort described herein.

According to a third aspect, embodiments of the invention provide a pitch control system for a wind turbine rotor blade. The pitch control system comprises a bearing attached to a wind turbine hub and arranged to be attachable to a wind turbine rotor blade. The bearing allows the rotor blade to rotate relative to the hub about its longitudinal axis. Two or more pitch gears, preferably ring gears, are coupled to the pitch control system, either being coupled to the bearing or to the hub, the pitch gears being separated along the axis of rotation of the bearing. One or more pinions, coupled to one or more actuators, such as an electric or hydraulic motor, are arranged to engage with one or more of the two or more pitch gears and to cause rotation of a rotor blade with the bearing. The one or more pitch gears are attached directly to, formed in, or coupled to, a common element of the pitch system, and particularly to the bearing, the hub, or to the blade. The pitch gears are also preferably attached or coupled to one another. With the pitch gears both being coupled to one side of the bearing, being the hub or blade side, the actuator(s) or pinion(s) are coupled to the other corresponding side of the bearing.

Having the one or more pitch gears coupled to a common element of the pitch system can be applied to the first or second aspects of the invention. Likewise, any preferable feature of the first aspect or second aspect may be combined with the third aspect, and any preferable features of the third aspect,

### Brief Description of the Drawings

Embodiments of the invention will now be described, by way of example only, and with reference to the accompanying drawings, in which:
Figure 1 is a front view of a horizontal axis wind turbine;
Figure 2 is a schematic illustration showing a known pitch control system;
Figure 3 is a cross section of a portion of a wind turbine pitch control system according to an embodiment of the present invention;
Figure 4 is an expanded view of a blade coupling arrangement shown in Figure 3;
Figure 5 is an expanded view of the components of the wind turbine pitch control system shown in figure 3;
Figure 6 is an alternate pinion arrangement;
Figure 7 is a cross section of a portion of an alternate blade coupling arrangement and gear support arrangement;
Figure 8 is a cross section of a portion of a gear ring incorporating an additional feature;
Figure 9 is an example of two ring gears in which the joins between segments are offset; and
Figure 10 shows an example of an arrangement in which the pitch gear is coupled to the hub rather than to the bearing.

### Detailed Description of the Preferred Embodiments

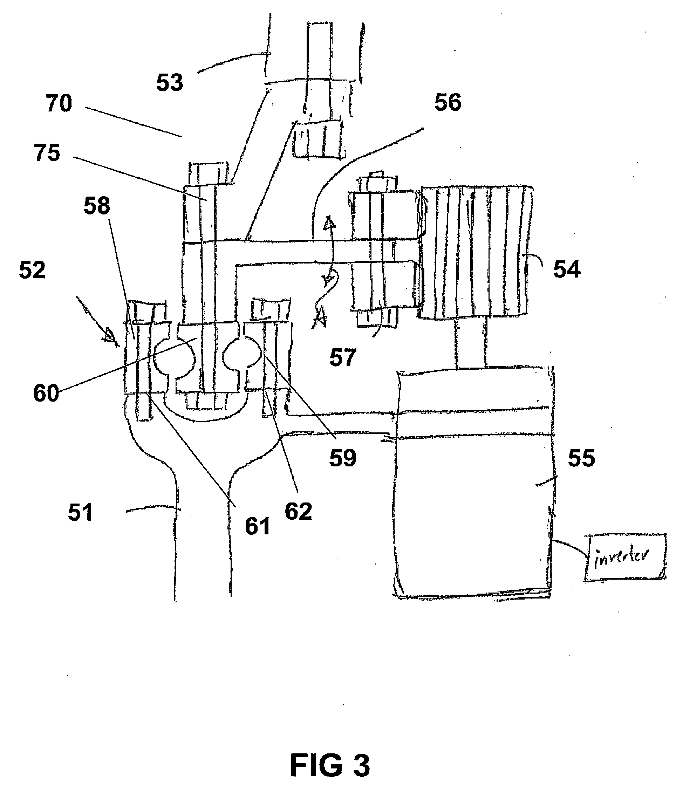

Figure 3 shows a section of the hub, blade and intervening connections of a wind turbine incorporating a pitch control system/apparatus according to an embodiment of the present invention. Figure 3 generally shows a hub 51 attached to a pitch bearing 52. A blade 53 is coupled to the bearing by a blade coupling arrangement 70 comprising a number of members. A pitch ring actuator system is provided, comprising an AC synchronous motor or hydraulic motor 55 for generating a torque, and a pinion 54 and a gear ring 57 to transmit the torque to the bearing 52 to rotate the turbine blade about its longitudinal axis. The pitch actuator system is coupled to the blade coupling arrangement 70 by a mounting flange 56 attached to one of the members of the blade coupling arrangement.

The hub 51 is attached to a pitch bearing 52 of the sort described in PCT application no. WO2007/006301. The blade 53 is attached or coupled to the pitch bearing 52. The pitch bearing includes at least one outer ring 58, at least one centre ring 60 and at least one inner ring 59. The hub comprises a mount area for each of the blade units, the mount area comprising at least two concentric load transferring surfaces 61/62 for attaching the blade unit via the at least one pitch bearing. The load transferring surfaces may be separated by at least one groove. The pitch bearing is attached to the hub at the load transferring surfaces by fasteners, and preferably releasable fasteners, such as screws, bolts or studs.

The blade may be attached to the centre ring of the pitch bearing via the blade coupling arrangement 70 using fasteners such as screws, bolts or studs which may extend into the groove between the load transferring surfaces 61/62. The arrangement provides a direct path for the fasteners to pass through the bearing such that the fasteners may be substantially straight, such as a straight bolt 75 fastened by a nut either at the bearing end or the blade coupling flange end.

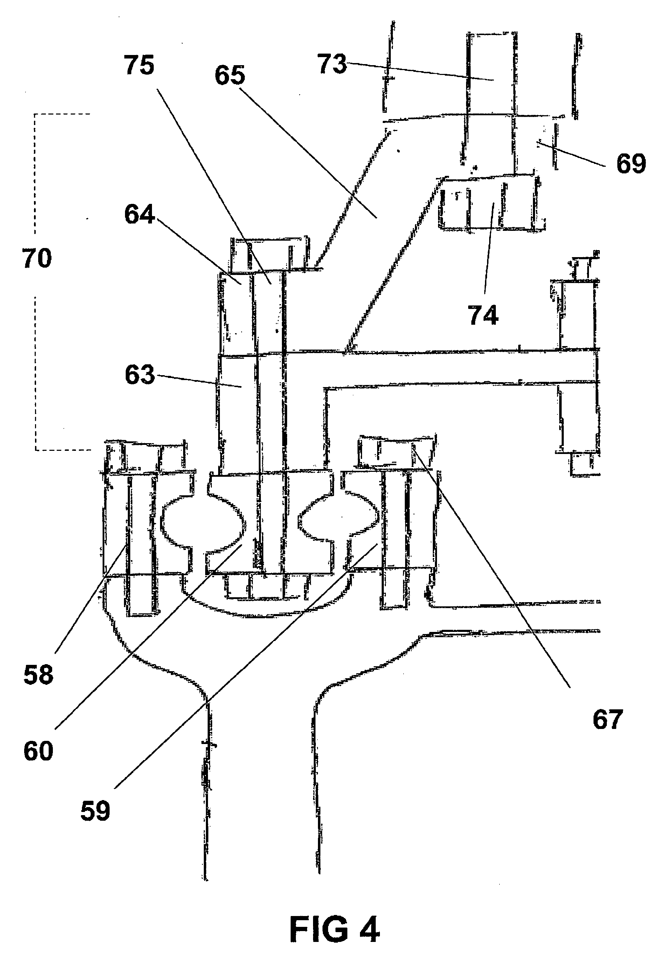

Figure 4 shows an enlargement of the bearing and blade portion of Figure 3. The blade coupling arrangement is shown generally by reference 70 and will be referred to as the blade coupling flange. The blade coupling flange connects the blade 53 to the bearing 52, extending generally/substantially in a direction parallel to the axis of rotation of the bearing, and comprises at least three main sections. The first section is a bearing coupling portion 64 for coupling the flange 70 to the bearing 52. The second section is an intermediate section 65 which is arranged at an angle to the axis of rotation of the bearing, rather than being substantially parallel to it. The third section is a blade coupling portion 69 for coupling the blade or blade root to the coupling flange and therefore to the bearing. The intermediate section is located between the bearing coupling portion and the blade coupling portion. Preferably all sections of the blade coupling flange are formed as an integral piece. The blade coupling flange, or intermediate section, preferably extends along a line passing through the centre of the pitch bearing structure, between the inner and outer bearing rings, and through the centre of lift of the blade. As a result of providing a coupling flange with a deflected intermediate section 65 it is possible to fasten the blade to the hub by fasteners located inside the structure of the wind turbine hub/blade coupling arrangement.

The first section 64 may couple to the bearing via an additional coupling member 63 located between the bearing and the bearing coupling portion 64. This additional coupling member is part of the mounting flange 56, which serves to couple the gear and pinion mechanism 54/57 to the bearing and will be referred to as the gear ring mounting flange. The mounting flange 56 is coupled to the same ring of the bearing as the blade. The member 63 may be integral with the first section 64, and therefore may also be integral with the entire blade coupling flange, which can be formed as a single piece. It is also possible for the mounting flange 56 to be attached directly to the first section 64.

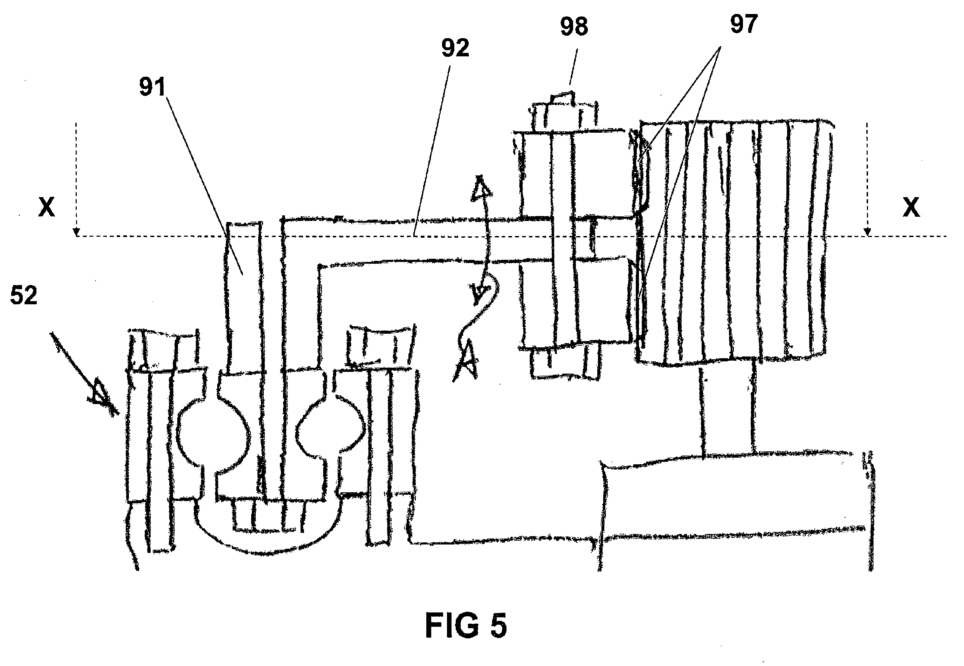

Figure 5 shows an enlargement of the gear ring mounting flange, bearing and gear and pinion arrangement. The gear ring mounting flange comprises a first portion 91 for coupling the flange to the pitch bearing 52, and a second portion 92 extending radially inward towards the axis of rotation of the bearing to which the gear ring is attached. The first portion extends along the direction from the bearing to the blade tip to support the second portion between the bearing and the blade tip. Preferably the second portion extends inwardly at an angle substantially perpendicular to the axis of rotation of the bearing, although it is possible that the second portion extends at an angle greater or less than substantially 90° to provide a conical shape with sloping sides.

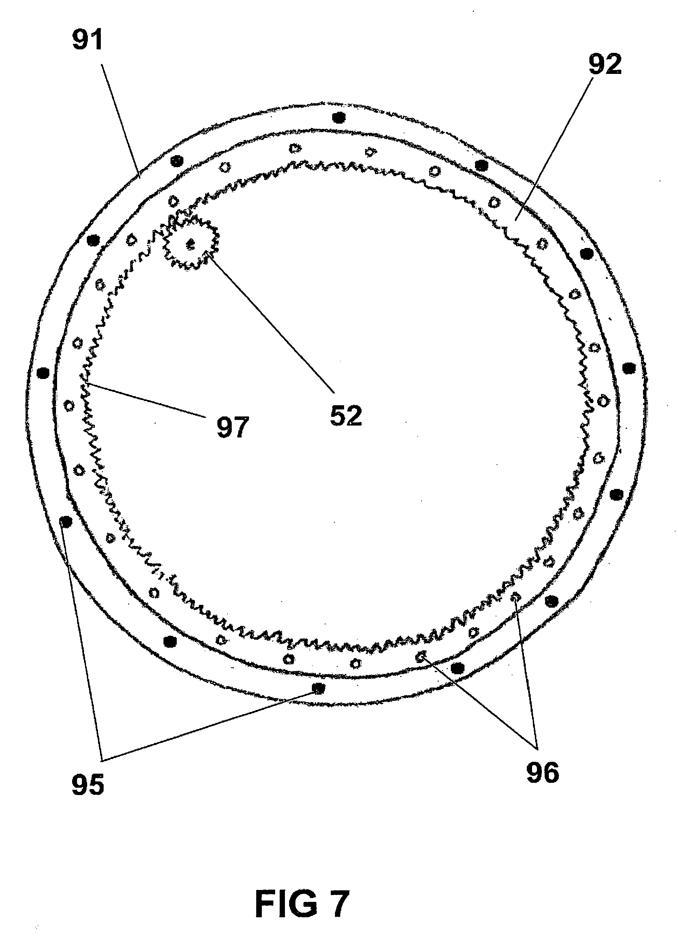

Figure 7 shows a cross sectional view of the gear ring mounting flange, gear ring and pinion along the line X-X of Figure 5, but does not show the attachment assembly 98 described in more detail below. Figure 7 shows the first portion 91 and second portion 92 of the gear ring mounting flange are shaped as an annulus, centred on the axis of rotation of the pitch bearing. They are preferably integrally formed as a single piece, but could be bonded together by a suitable method such as welding or using bolts. The dimension of the first portion in the direction of the axis of rotation of the bearing is preferably greater than the dimension of the second portion such that the second portion is supported at a certain distance further along the axis of rotation of the bearing than the bearing itself in relation to the blade tip, i.e. between the bearing and the blade tip. This allows the gear ring mounting flange to couple the gear ring and pinion arrangement to the central ring of the three ring bearing. It also ensures that the second portion extends over the nuts 67 attaching the bearing to the hub.

The gear ring mounting flange is attached to the gear rings 97 by a number of attachment assemblies 98. The gear ring assembly is shown as comprising two co-axial gear rings centred on the axis of rotation of the pitch bearing. The attachment assemblies each comprise a bolt and nut to retain the gear rings in position, the bolt passing through a hole in both gear rings and the gear ring mounting flange. The attachment assemblies are distributed around the circumference of the gear rings/inner circumference of the flange. A pinion 54 engages with the gear rings 97. The pinion is driven by a motor, such as an AC synchronous motor or a hydraulic motor. The pinion is also coupled to the hub 51 by a support attached to the motor.

The gear ring mounting flange may be made of steel or similar material, and may be made of the same material used for the bearing. The annulus structure of the mounting flange ensures that the second portion is stiff in the radial and circumferential directions. The dimension in the axial direction can be arranged so that the flange is relatively more flexible in the axial direction of the bearing A, seen in Figure 5, to allow for movement along this axis. In large scale commercial turbines the thickness of the second portion in the axial direction of the bearing may be between 10mm and 30mm, preferably between 15mm and 25mm and more preferably around 20mm. The axial distance between the bearing and the second portion of the gear ring mounting flange is determined by the extension of the first portion of the gear ring mounting flange and should be large enough for the flange to extend over the bolt fastening the inner bearing ring to the hub. It is preferable for the gear surface to have as large a diameter, relative to the rotational axis of the bearing, as possible so that the mechanical advantage is maximised. Therefore, the gear surface should be located at a position having a radial distance to the axis of rotation of the bearing that is as close to the corresponding radial distance of the inner bearing ring as possible. The flange can be arranged to support the gear in a position such that these radial distances are substantially equal, but for large turbines having a bearing diameter of, for example, 2 metres up to around 6 metres, it may be sufficient for the second portion to extend around 30 to 50 cm into the structure, in the radial direction of the bearing.

The relative flexibility of the gear ring mounting flange allows tension in the gear ring to be distributed and uneven tensions to be compensated for. For a single gear ring the gear ring mounting flange would contact the gear ring at the mid point of its dimension extending in the direction of the axis of rotation of the bearing such that an equal amount of gear tooth length extends above and below the join with the mounting flange. A higher tension on either side of the gear ring, i.e. on the top and bottom sides above or below the plane of the gear ring mounting flange relative to the axis of rotation of the bearing, due to unequal loading or momentary unbalanced forces will cause the gear ring mounting flange to flex to compensate. For multiple gear rings, as with the present invention, the mounting flange supports gear rings, preferably either side thereof, and compensates for changes in the load distribution between the gear rings by flexing in the same way described for a single gear ring.

In order to pitch the rotor blade a torque is generated by the motor and transmitted to the pinion by the motor shaft. The pinion rotates and transfers torque to the gear rings causing the gear rings and the attached load of the blade to rotate with the middle ring of the bearing. The pinion may rotate clockwise or anti-clockwise.

It should be noted that more than one pinion can be engaged with the gear rings, each with their own driving motor, to reduce the amount of torque each motor must provide. The pinions may be distributed around the circumference of the gear rings, preferably at regular intervals. For example, 3 pinions may be used, each located ⅓ of the way around the circumference of the gear rings.

The two gear rings are separated by a distance along a line parallel to the axis of rotation of the bearing. One ring is coupled to the gear ring mounting flange on either side, one being coupled on the blade side and the other on the bearing side. The two gear rings extend a total distance X along a line parallel to the bearing axis. The pinion also extends approximately the same distance along the same line to avoid adding excess weight.

The gear rings may be mounted such that there is a degree of give or play in their position relative to the gear ring mounting flange. The gear rings may be able to rotate by a small amount relative to the bearing, meaning that they can rotate by a certain amount without causing the bearing to rotate. This compensates for any misalignments between the teeth of the two gears due to their mounting positions on the flange. The amount of play could be small, allowing the gear rings to move 1°-5° or 1°-3° relative to the flange or to each other. The ideal amount of play required may be less, corresponding approximately to the distance along the circumference of the gear ring taken up by a single tooth. This flexibility can be achieved by ensuring that the fasteners provide a degree of play, for example by arranging the restraining bolts such that they do not need to be fully tightened and/or making the bolt holes larger than required. Additional padding or lubrication to prevent premature wear would also be provided. In a similar manner, the gear rings may also be able to pivot relative to each other, about their axis of rotation, such that they can pivot in the direction of their axis of rotation.

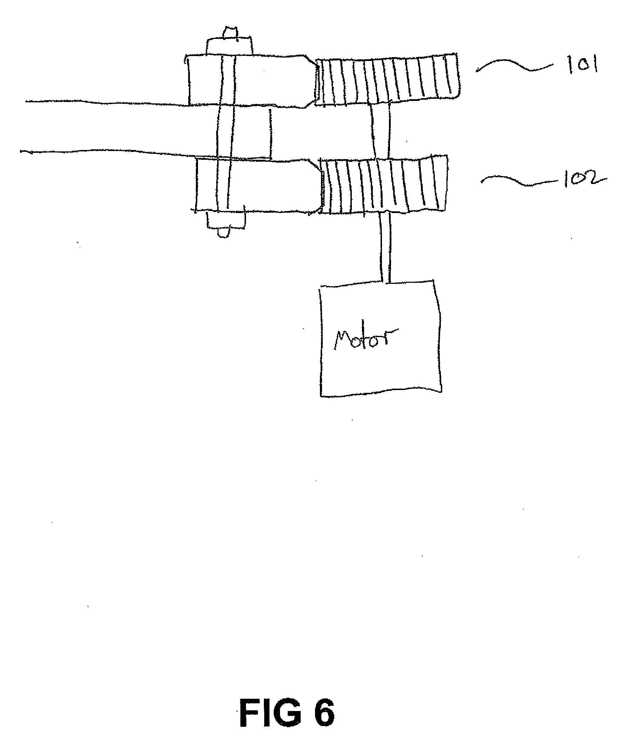

The pinion is shown as having a gear ring engaging surface extending approximately the same distance as the gear rings along a line substantially parallel to the bearing axis. However, embodiments of the invention may provide a pinion with two or more gear ring engaging surfaces each separated along the axis of rotation of the bearing. Figure 6 shows an appropriate pinion engaging with the gear rings. As can be seen from the figure, the pinion has two engaging portions of surfaces 101 and 102. Effectively two pinions 101 and 102 are provided, both attached to, or formed on, a common motor shaft.

Rather than having two or more pinions formed on, or attached to, a common motor shaft, it is possible that each pinion, offset along the rotational axis of the bearing relative to another pinion, is connected to an independent motor. This could be achieved by providing a pitch system for a wind turbine rotor blade, the pitch system comprising a pitch bearing attached to a wind turbine hub and attachable to a wind turbine rotor blade. Two or more pitch gears are coupled to the pitch system, the pitch gears being spaced along the axis of rotation of the bearing. Two or more pinions are coupled to respective actuators, the pinions arranged to engage with different respective ones of the two or more pitch gears for rotating a rotor blade on the bearing. The actuators are both mounted directly on, or coupled to, the same pitch system component, such as the hub, the bearing, the blade or the blade coupling flange of the sort described herein. When mounted on the bearing the actuators are both coupled to, or mounted on, the same bearing ring. The two or more pinions are located at different circumferential positions along the pitch gear to one another. As a result, rather than having an arrangement of the type shown in Figure 6 in which each pitch gear is engaged by distinct pinions on a common shaft of a common actuator, each pinion is instead coupled to a separate shaft of a separate actuator. In order to accommodate this, each pinion is circumferentially displaced from the other around the pitch gear.

It is also possible for more than two gear rings to be used, each separated by spacer elements coupled to the flange fasteners. Corresponding numbers of pinion engagement surfaces could be provided if required.

As mentioned above, in some embodiments of the invention the gear may comprise a first discrete segment and one or more other discrete segments, each segment having a plurality of teeth for engaging with a pinion. Each segment may abut one or more other segments to form a continuous gear surface over at least a portion of the circumference of the gear. More preferably the gear surface covers less than the total circumference of the gear. Preferably the first segment of the gear extends along a smaller circumferential distance than the total circumferential distance of the other segments of the gear. Ideally, the first segment extends along the gear by an amount arranged to correspond to the range of rotation required of the blades within the operational range when the turbine is extracting energy from oncoming wind, such that in use the pinion engages only with the first segment when the turbine blades are pitched within the operational range. The first segment may extend along the gear to define a segment having an angle, defined between the intersecting radii passing through the ends of the segment, of between 4° and 60°. More preferably the segment has an angle of between 30° and 50°. More preferably still, the first segment has an angle of between 30° and 35°. Turbine blade pitching systems spend a large proportion of time during operation being pitched between the -2° and +2° position. Therefore, an even more targeted arrangement could provide a segment of between 4° and 10° positioned such that it is contacted by the pinion when the blade is pitching between the -2° and +2° positions. Some or all of the gear segments may be coupled to the hub by removable fasteners, such as bolts or clamps, to allow worn segments/sectors to be replaced. The first segment may be comprised of a different material to the other segments, whereby the material of the first segment is harder wearing than the material used for the other segments. The gear may be coupled to the bearing by a flange that is connectable to the pitch bearing and arranged to support the gear between the axis of rotation of the bearing and the bearing circumference in use. The flange, in use, preferably extends in a direction substantially perpendicular to the axis of rotation of the bearing. The flange may comprise a first portion and a second portion, and in use the first portion may connect to the bearing and support the second portion such that the distance between the second portion and the blade tip is smaller than the distance between the bearing and the blade tip, along the bearing axis, and the second portion extends into the space between the circumference of the bearing and the axis of rotation of the pitch bearing.

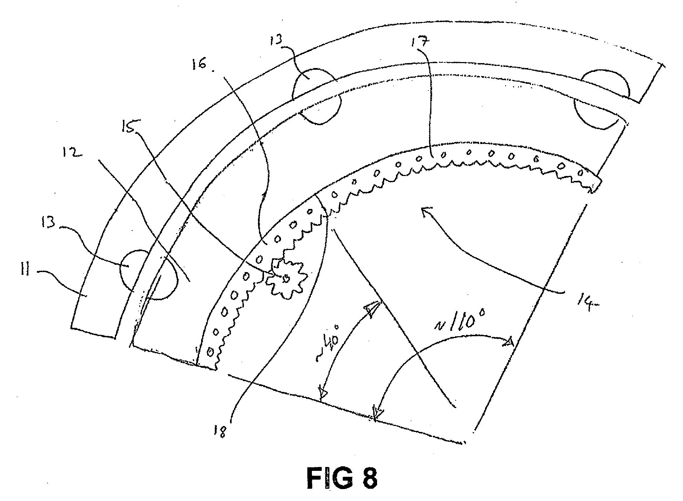

Figure 8 shows a gear ring 14 comprising at least two sectors or segments. A first sector 16 extends around the inner circumference of the inner pitch bearing ring 12 by a certain number of degrees. A second sector 17 is located next to the first sector 16, and preferably abuts it at a join 18. The extent to which each segment extends around the circumference can be defined by the angle formed between the radii connecting each end of the segment to the rotational axis of the bearing as shown in Figure 3. The first sector covers an angle around the inner circumference of the inner pitch bearing corresponding to the amount of rotation required of the blades within the operational range. The first sector may extend around the inner circumference of the inner pitch bearing ring by an angle of between 4° to 60°, preferably between 30° to 50°, more preferably around 40°, and even more preferably between 30° and 35°. The second sector may extend around the inner circumference by an angle of between 40° to 90°, preferably between 50° to 80° and even more preferably around 70°. It is possible for further sectors to be provided to give coverage of up to 360°, but it is not usually necessary for the ring gear to extend around the entirety of the circumference to achieve the required amount of pitching. Although each sector could be subdivided into further sectors, it is preferred to use as few sectors as possible because the join between neighbouring sectors is a potential weak point.

The gear ring segments may each be coupled to the flange by releasable fasteners such that individual gear ring segments can be removed. The rotor blade may be aligned such that the relatively narrow range of pitch necessary for controlling power, also known as the power control range or operational range in which the turbine is extracting energy from oncoming wind, is performed by the pinion acting on the first sector of the gear ring. The first sector can therefore be smaller than the other sectors.

In order to rotate the rotor blade about its longitudinal axis the pinion 15 is rotated by a motor. The pinion engages with the gear ring 14 and applies a force to it, causing the gear ring and bearing ring 12 to rotate, along with the blade, relative to the bearing ring 11 and the hub. The pinion may rotate either clockwise or anti-clockwise depending on whether the pitch angle of the blade is to be increased or decreased.

The rotor blade is aligned such that the relatively narrow range of pitch required in the operational range necessary for controlling power is performed by the pinions acting on the first sectors of the gear ring. The first sector of the gear ring may therefore also be known as the power control sector of the bearing ring. In the event that the blades need to be pitched to a greater extent than usually required in the power control range, such as during feathering, the pinion will pass over the join 18 and act on the second sector. The number of degrees covered by a particular sector, i.e. the angle defined between the intersecting radii passing through the segment ends, usually directly corresponds to the number of degrees through which the rotor blade can be pitched using that sector.

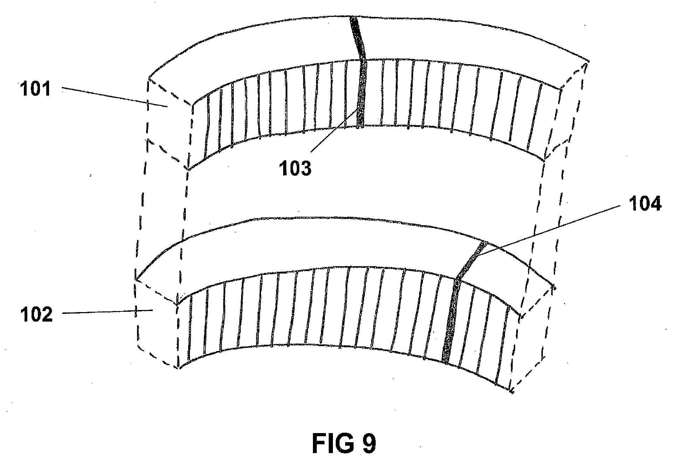

As mentioned above, the join between segments of the gear surface can be a potential weak spot as the pinion passes over the join. This can be mitigated by offsetting corresponding joins on each of the gears. Figure 9 shows an example in which the joins are offset. Portions of a first gear ring 101 and a second gear ring 102 are shown. The gear rings both comprise a number of corresponding segments, for example each gear ring may comprise a first segment for pitching the blade in the operational region and a second segment for feathering the blade. Each gear ring is arranged to be engaged by either one or more common pinions or separate pinions as described above, although the pinions are not shown in the Figure. The teeth of the gears may be aligned with one another, but where separate pinions are used this is not necessary. The joins 103 and 104 between segments of each of the gear rings are offset such that, during pitching, the one or more pinions do not pass over both joins simultaneously. Preferably the first join 103 and corresponding join 104 are separated by 5°-15°, and preferably around 10°. The offset may be achieved by making the first segment on one of the gear rings longer than the first segment on the other, or by offsetting segments of substantially equal length.

In addition, the gear surfaces themselves can be arranged so that the force or load on each, exerted by the pinion, differs over the length of the gear surface. In particular, the gear surface can be arranged to experience a reduced load from the pinion in the region of the join between segments. This can be achieved by altering the profile of the teeth in the desired region, for example reducing the height of the teeth by grinding or machining them down in the region in which load is to be reduced. The reduction in load can vary between a maximum load and a minimum load in a smooth manner, e.g. in a linear manner, from predetermined points either side of the join to avoid a step change in the load applied to the gear surface. As a pinion moves over the gear surface the load would therefore decrease from a first value starting at a first predetermined point, reaching a minimum value over the join, and increasing again to the first value at a second predetermined point. This can be achieved by reducing the height of the gear teeth either side of the join in a corresponding manner, for example in a linear manner, which would preferably be symmetrical about the join. While the load exerted on one gear ring is reduced as the pinion passes over the join of that gear ring, the corresponding offset gear ring preferably maintains a full load.

Embodiments of the invention have been described in relation to a three ring bearing having an inner, outer and central ring and the blade being connected to the central ring by the blade coupling flange. It will be appreciated that embodiments of the invention may be used to connect the blade to the inner, outer or both rings or can be utilised in other types of bearing, such as a two ring bearing.

In particular, although the present invention finds particular use in a three ring bearing arrangement in which it is desired to attach or couple the blade to the middle ring, the present invention may be used with different bearings such as a two ring bearing. The present invention may be incorporated onto a gear ring that is formed directly, or attached directly, to a bearing ring, such as the inner bearing ring like the arrangement shown in Figure 2. The gear ring mounting flange would not be required.

The term "ring gear", used throughout the description, is intended to refer to the fact that the gear teeth are formed on a ring structure. There is no requirement for the gear teeth to extend around the entirety of the circumference of the ring; the teeth may only extend around a portion thereof.

The gear ring segments may each be coupled to the flange by releasable fasteners such that individual gear ring segments can be removed. The rotor blade may be aligned such that the relatively narrow range of pitch necessary for controlling power, also known as the power control range, is performed by the pinion acting on the first sector of the gear ring. The first sector can therefore be smaller than the other sectors.

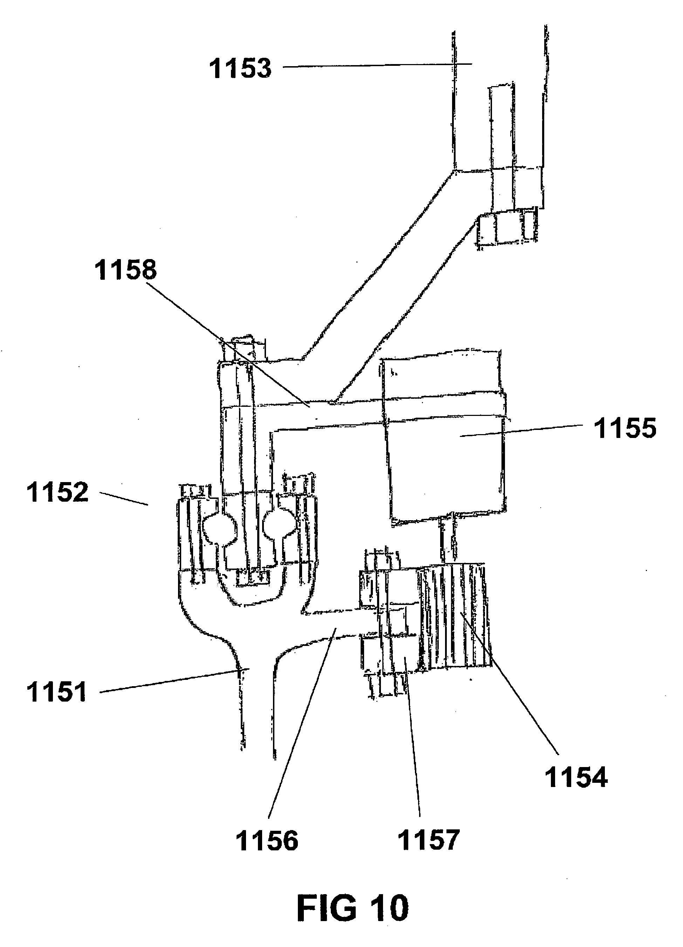

Examples have been described in which the gear rings are coupled to the bearing, and particularly to the portion, or side, of the bearing coupled to the blade, with the driving pinion being coupled to the hub, or to the portion, or side, of the bearing coupled to the hub, such that the pitch motor's torque is thus transferred to the bearing to cause relative rotation between the blade and the hub. However, it is possible for the gear rings to be coupled to the hub, or to the portion of the bearing coupled to the hub, instead, with the pinion, or pinions, being coupled to the bearing, and particularly to the portion of the bearing coupled to the blade. It should be understood that, generally, to generate relative rotation between the blade and the hub, the pinion or pinions, or actuator or actuators, should be coupled to one of the hub or the blade side of the bearing, with the pitch gears being coupled to the opposing side. The bearing can thus be considered to have sides or portions that can rotate relative to one another to effect relative rotation between the two elements coupled to either side or portion. Figure 10 shows an example of such an alternative arrangement, in which the pinion 1154 is coupled to the bearing 1152 via the motor 1155, which is attached to the bearing by support means 1158. The support means could be attached directly to the bearing or it may be coupled to, or part of a blade coupling flange in a similar arrangement to the coupling of the pitch gear flange described above. The pitch gear 1157 is releaseably coupled to the hub, with a gear mounting flange 1156 extending radially inward towards the axis of rotation of the pitch bearing. The gear mounting flange 1157 can have the same features as described for the embodiments in which the pitch gears are coupled to the bearing, but it will be appreciated in this example that the portion 91 shown in Figure 5 will not be required, since the flange can be coupled directly to the hub.

## Claims

1. A system for one wind turbine rotor blade (53), the system comprising:
- a pitch system comprising a pitch bearing (52) attached to a wind turbine hub (51) and attachable to said wind turbine rotor blade;
- two or more pitch gears (57) coupled to the pitch system, the pitch gears being spaced along the axis of rotation of the bearing;
**characterized in that** said system further comprises
- an actuator (55) arranged to exert a torque on the two or more pitch gears via one or more pinions (54) coupled to the actuator for rotating said rotor blade on the bearing.

2. A system according to claim 1, wherein the two or more pitch gears are ring gears mounted so as to rotate about a common centre about the axis of rotation of the bearing.

3. A system according to any of claims 1 or 2, wherein the teeth of each gear are aligned with the teeth of the other gears along a line parallel to the axis of rotation of the bearing.

4. A system according to any preceding claim, wherein one or more of the pitch gears are comprised of a first segment (16) and one or more other segments (17), each segment having a plurality of teeth for engaging with the at least one of the one or more pinions.

5. A system according to claim 4, wherein a segment of the one or more pitch gears extends along a smaller circumferential distance than the other segments.

6. A system according to claim 4 or 5, wherein the join (18) between a segment and an adjacent segment is offset from the join between a corresponding segment and adjacent segment of another pitch gear.

7. A system according to claim 4, 5 or 6, wherein the gear surface in the region of the join between two segments is arranged to reduce the load exerted on the gear surface by the pinion, wherein the gear teeth of the gear surface in the region of the join are reduced in height relative to other gear teeth of the gear surface.

8. A system according to any preceding claim, wherein at least one of the two or more pitch gears is mounted such that it can rotate relative to the axis of rotation of the bearing independently of the bearing by a predetermined amount, the amount of rotation independent of the bearing corresponds to the arc occupied by a single tooth on the pitch gear.

9. A system according to any preceding claim, wherein the one or more pitch gears can pivot relative to each other.

10. A system according to any preceding claim, wherein the pitch gears are coupled to the bearing by releasable fasteners.

11. A system according to claim 10, wherein the pitch gears are attached to the bearing and held in place by one or more common fasteners, comprising for example bolts received in holes in the bearing passing through flanges on the ring gears.

12. A system according to any of claims 1 to 11, wherein the pitch gears are coupled to an element of the pitch system, and preferably to the bearing, by a flange, the flange being connected to the element of the pitch system and being arranged to support the pitch gears such that they are separate from the element of the pitch system; the flange supporting the pitch gears between the axis of rotation of the pitch bearing and the pitch bearing circumference; the flange comprising a first portion and a second portion, the first portion connecting to the pitch bearing and supporting the second portion at a distance closer to the blade tip than the bearing along the bearing axis, and the second portion extending into the space between the circumference of the bearing and the axis of rotation of the bearing.

13. A system according to claim 12, wherein the pitch gears are attached to the flange by one or more common fasteners such as a protrusion extending through holes in the pitch gears and flange and secured at either end.

14. A system according to any preceding claim, wherein the two or more pitch gears are attached directly to, or coupled to, a common element of the pitch system or to the blade, such that the pitch gears are coupled to either the hub side or blade side of the bearing, the pinions being coupled to the corresponding other side of the bearing, the two or more pitch gears preferably being attached or coupled to each other.

15. A wind turbine (1) comprising one or more of the systems according to any preceding claim.

16. A pitch sub assembly for use in the system of any of claims 1 to 14 comprising:
- a pitch bearing (52), being attachable to a wind turbine hub (51) and wind turbine blade (53); and two or more pitch gears (57) coupled to the pitch bearing, the pitch gears being spaced along the axis of rotation of the bearing; and
- an actuator (55) arranged to exert a torque on the two or more pitch gears via one or more pinions (54) coupled to the actuator for rotating a rotor blade on the bearing.

## Patentansprüche

1. System für ein Windturbinenrotorblatt (53), wobei das System Folgendes umfasst:
- ein System zur Blattverstellung, das ein Blattlager (52) umfasst, das an einer Windturbinennabe (51) befestigt ist und das an dem Windturbinenrotorblatt befestigt werden kann;
- zwei oder mehrere Verstellgetriebe (57), die mit dem System zur Blattverstellung verbunden sind, wobei die Verstellgetriebe entlang der Drehachse des Lagers beabstandet sind;
**dadurch gekennzeichnet, dass** das System ferner umfasst:
- eine Betätigungsvorrichtung (55), die angeordnet ist, um ein Drehmoment auf die zwei oder mehreren Verstellgetriebe über ein oder mehrere Ritzel (54) auszuüben, die mit der Betätigungsvorrichtung verbunden sind, um das Rotorblatt auf dem Lager zu drehen.

2. System nach Anspruch 1, wobei die zwei oder mehreren Verstellgetriebe Hohlräder sind, die befestigt sind, um sich um einen gemeinsamen Mittelpunkt um die Drehachse des Lagers zu drehen.

3. System nach einem der Ansprüche 1 oder 2, wobei die Zähne jedes Getriebes ausgerichtet sind auf die Zähne des anderen Getriebes entlang einer Linie, die parallel zu der Drehachse des Lagers ist.

4. System nach einem vorhergehenden Anspruch, wobei eines oder mehrere der Verstellgetriebe aus einem ersten Segment (16) und aus einem oder mehreren anderen Segmenten (17) bestehen, wobei jedes Segment mehrere Zähne aufweist, um mit dem mindestens einen des einen oder der mehreren Ritzel in Eingriff zu gehen.

5. System nach Anspruch 4, wobei sich ein Segment des einen oder der mehreren Verstellgetriebe entlang eines kleineren Umfangsabstandes als die anderen Segmente erstreckt.

6. System nach Anspruch 4 oder 5, wobei die Verbindung (18) zwischen einem Segment und einem benachbarten Segment von der Verbindung zwischen einem entsprechenden Segment und einem benachbarten Segment eines anderen Verstellgetriebes versetzt ist.

7. System nach Anspruch 4, 5 oder 6, wobei die Zahnradfläche in dem Bereich der Verbindung zwischen zwei Segmenten angeordnet ist, um die Belastung, die auf die Zahnradfläche durch das Ritzel ausgeübt wird, zu verringern, wobei die Verzahnung der Zahnradfläche in dem Bereich der Verbindung in Bezug auf die Höhe relativ zu anderen Verzahnungen der Zahnradfläche vermindert ist.

8. System nach einem vorhergehenden Anspruch, wobei mindestens eines der zwei oder mehreren Verstellgetriebe derart befestigt ist, dass es sich relativ zu der Drehachse des Lagers unabhängig von dem Lager um eine vorgegebene Größe drehen kann, wobei die Größe der Drehung unabhängig von dem Lager dem Bogen entspricht, der von einem einzelnen Zahn auf dem Verstellgetriebe eingenommen wird.

9. System nach einem vorhergehenden Anspruch, wobei das eine oder die mehreren Verstellgetriebe sich relativ zueinander drehen.

10. System nach einem vorhergehenden Anspruch, wobei die Verstellgetriebe mit dem Lager durch lösbare Befestigungsmittel verbunden sind.

11. System nach Anspruch 10, wobei die Verstellgetriebe an dem Lager befestigt sind und durch ein oder mehrere gewöhnliche Befestigungsmittel in Position gehalten werden, die zum Beispiel Bolzen, die in Löchern in dem Lager, die durch die Flansche auf den Hohlrädern hindurchgehen, aufgenommen werden, umfassen.

12. System nach einem der Ansprüche 1 bis 11, wobei die Verstellgetriebe mit einem Element des Systems zur Blattverstellung, und vorzugsweise mit dem Lager, durch einen Flansch verbunden sind, wobei der Flansch mit dem Element des Systems zur Blattverstellung verbunden ist und angeordnet ist, um die Verstellgetriebe derart zu tragen, dass sie von dem Element des Systems zur Blattverstellung getrennt sind; wobei der Flansch die Verstellgetriebe zwischen der Drehachse des Blattlagers und des Blattlagerumfangs trägt; wobei der Flansch einen ersten Abschnitt und einen zweiten Abschnitt umfasst, wobei der erste Abschnitt mit dem Blattlager verbindet und den zweiten Abschnitt in einem Abstand, der enger an der Blattspitze als das Lager entlang der Lagerachse ist, trägt, und wobei sich der zweite Abschnitt in den Raum zwischen dem Umfang des Lagers und der Drehachse des Lagers erstreckt.

13. System nach Anspruch 12, wobei die Verstellgetriebe an dem Flansch durch ein oder mehrere gewöhnliche Befestigungsmittel befestigt sind, wie etwa durch einen Überstand, der sich durch Löcher in die Verstellgetriebe erstreckt, und an einem der Enden geflanscht und befestigt ist.

14. System nach einem vorhergehenden Anspruch, wobei die zwei oder die mehreren Verstellgetriebe mit einem gewöhnlichen Element des Systems zur Blattverstellung oder mit dem Blatt derart direkt befestigt oder verbunden sind, dass die Verstellgetriebe entweder mit der Nabenseite oder mit der Blattseite des Lagers verbunden sind, wobei die Ritzel mit der entsprechenden anderen Seite des Lagers verbunden sind, wobei die zwei oder die mehreren Verstellgetriebe vorzugsweise miteinander befestigt oder verbunden sind.

15. Windturbine (1), die ein oder mehrere der Systeme nach einem vorhergehenden Anspruch umfasst.

16. Unteranordnung einer Blattverstellung für eine Verwendung in dem System nach einem der Ansprüche 1 bis 14, wobei die Unteranordnung Folgendes umfasst:
- ein Blattlager (52), das an einer Windturbinennabe (51) und an einem Windturbinenrotorblatt (53) befestigt werden kann; und zwei oder mehrere Verstellgetriebe (57), die mit dem Blattlager verbunden sind, wobei die Verstellgetriebe entlang der Drehachse des Lagers beabstandet sind; und
- eine Betätigungsvorrichtung (55), die angeordnet ist, um ein Drehmoment auf die zwei oder die mehreren Verstellgetriebe über ein oder mehrere Ritzel (54) auszuüben, die mit der Betätigungsvorrichtung verbunden sind, um ein Rotorblatt auf dem Lager zu drehen.

## Revendications

1. Système pour une pale de rotor (53) d'éolienne, le système comprenant :
un système de pas comprenant une articulation de pas (52) fixée sur un moyeu d'éolienne (51) et pouvant être fixé sur ladite pale de rotor d'éolienne ;
deux ou plusieurs engrenages à pas (57) couplés au système de pas, les engrenages à pas étant espacés le long de l'axe de rotation du palier ;
**caractérisé en ce que** ledit système comprend en outre :
un actionneur (55) agencé pour exercer un couple sur les deux ou plusieurs engrenages à pas via un ou plusieurs pignons (54) couplés à l'actionneur pour faire tourner ladite pale de rotor sur le palier.

2. Système selon la revendication 1, dans lequel les deux ou plusieurs engrenages à pas sont des couronnes montées afin de tourner autour d'un centre commun autour de l'axe de rotation du palier.

3. Système selon l'une quelconque des revendications 1 ou 2, dans lequel les dents de chaque engrenage sont alignées avec les dents des autres engrenages le long d'une ligne parallèle à l'axe de rotation du palier.

4. Système selon l'une quelconque des revendications précédentes, dans lequel un ou plusieurs des engrenages à pas sont composés d'un premier segment (16) et d'un ou de plusieurs autres segments (17), chaque segment ayant une pluralité de dents pour se mettre en prise avec le au moins un des un ou plusieurs pignons.

5. Système selon la revendication 4, dans lequel un segment des un ou plusieurs engrenages à pas s'étend le long d'une plus petite distance circonférentielle que les autres segments.

6. Système selon la revendication 4 ou 5, dans lequel l'assemblage (18) entre un segment et un segment adjacent est décalé par rapport à l'assemblage entre un segment correspondant et un segment adjacent d'un autre engrenage à pas.

7. Système selon la revendication 4, 5 ou 6, dans lequel la surface d'engrenage dans la région d'assemblage entre deux segments est agencée pour réduire la charge exercée sur la surface d'engrenage par le pignon, dans lequel les dents d'engrenage de la surface d'engrenage dans la région de l'assemblage sont réduites en hauteur par rapport aux autres dents d'engrenage de la surface d'engrenage.

8. Système selon l'une quelconque des revendications précédentes, dans lequel au moins l'un des deux ou plusieurs engrenages à pas est monté de sorte qu'il peut tourner par rapport à l'axe de rotation du palier indépendamment du palier selon une quantité prédéterminée, la quantité de rotation indépendante du pallier correspond à l'arc occupé par une seule dent sur l'engrenage à pas.

9. Système selon l'une quelconque des revendications précédentes, dans lequel les un ou plusieurs engrenages à pas peuvent pivoter les uns par rapport aux autres.

10. Système selon l'une quelconque des revendications précédentes, dans lequel les engrenages à pas sont couplés au palier par des fixations amovibles.

11. Système selon la revendication 10, dans lequel les engrenages à pas sont fixés sur le palier et maintenus en place par une ou plusieurs fixations communes, comprenant par exemple des boulons reçus dans des trous dans le palier passant à travers des brides sur les couronnes.

12. Système selon l'une quelconque des revendications 1 à 11, dans lequel les engrenages à pas sont couplés à un élément du système de pas, et de préférence au palier, par une bride, la bride étant raccordée à l'élément du système de pas et étant agencée pour supporter les engrenages à pas de sorte qu'ils sont séparés de l'élément du système de pas ; la bride supportant les engrenages à pas entre l'axe de rotation de l'articulation de pas et la circonférence de l'articulation de pas ; la bride comprenant une première partie et une seconde partie, la première partie se raccordant à l'articulation de pas et supportant la seconde partie à une distance plus proche de la pointe de pale que le palier le long de l'axe de palier, et la seconde partie s'étendant dans l'espace entre la circonférence du palier et l'axe de rotation du palier.

13. Système selon la revendication 12, dans lequel les engrenages à pas sont fixés sur la bride par une ou plusieurs fixations communes en tant que saillie s'étendant à travers des trous dans les engrenages à pas et la bride et fixées au niveau de chaque extrémité.

14. Système selon l'une quelconque des revendications précédentes, dans lequel les deux ou plusieurs engrenages à pas sont fixés directement à ou couplés à un élément commun du système de pas ou à la pale, de sorte que les engrenages à pas sont couplés au côté du moyeu ou au côté de la pale du palier, les pignons étant couplés à l'autre côté correspondant du palier, les deux ou plusieurs engrenages à pas étant généralement fixés ou couplés entre eux.

15. Eolienne (1) comprenant un ou plusieurs des systèmes selon l'une quelconque des revendications précédentes.

16. Sous-ensemble de pas destiné à être utilisé dans le système selon l'une quelconque des revendications 1 à 14, comprenant :
une articulation de pas (52) qui peut être fixée à un moyeu d'éolienne (51) et une pale d'éolienne (53) ; et deux ou plusieurs engrenages à pas (57) couplés à l'articulation de pas, les engrenages à pas étant espacés le long de l'axe de rotation du palier ; et
un actionneur (55) agencé pour exercer un couple sur les deux ou plusieurs engrenages à pas via un ou plusieurs pistons (54) couplés à l'actionneur pour faire tourner une pale de rotor sur le palier.
